# EUROPEAN PATENT APPLICATION

(11) **EP 1 559 683 A2**
(43) Date of publication of application: **03.08.2005**
(21) Application number: 05075120.5
(22) Date of filing: 17.01.2005
(51) Int. Cl.: C02F 1/00, C02F 3/08

(54) **Method for cleaning water and filter combination**

(30) Priority: 19.01.2004 NL 1025280
(71) Applicant: Neil Hardy Aquatica Limited, Carlshalton Surrey SM5 4 DQ (GB); Schuldink, Hendrikus Egbert, 7711 CL Nieuwleusen (NL)
(72) Inventor: Schuldink, Hendrikus Egbert, NL-7711 CL Nieuwleusen (NL)

(57) **Abstract**

The invention relates to a method and an arrangement for cleaning water with the aid of a filter combination. The combination consists of a particles filter (1) and a moving bed filter (6). According to the invention, the particles filter (1) is placed on top of the moving bed filter (6), so that water originating from the particles filter (1) will provide for the movement of the moving bed filter (6).

## Description

The invention relates to a method for cleaning water, according to which water is conducted through a particles filter and subsequently through a moving bed filter. A method of this kind is known. In the particles filter, solid particles are removed from the water to be cleaned, while in the moving bed filter the water usually undergoes a biological cleaning process. In that case, the moving bed filter consists of a water filled reservoir, in which a substrate is kept in permanent movement. This substrate, which has a density that substantially corresponds to the density of water, is shaped so as to have a very large surface area. After some time, a layer of bacteria will grow onto the surface, in which the actual purification process takes place. The disadvantage of the known method is that in order to be effective, provisions must be put in place for keeping the moving bed moving. The method according to the invention substantially obviates this disadvantage and is characterised in that water originating from the particles filter flows onto a top of the moving bed filter, as a result of which the moving bed will be kept moving. An important additional advantage is that together with the water oxygen will be brought into the moving bed, which will accelerate the usually aerobic cleaning process. Oxygen will be brought into the water especially when water passes the screen, placed above the moving bed filter and to a lesser degree during the turbulent mixture with the water present in the moving bed, thereby generating large amounts of air bubbles.

For an optimal purification, it is important that the water traverses a path as long as possible inside the moving bed filter. A favourable embodiment of the inventive method which aims to put this in practise is characterised in that the water flows onto the moving bed filter near a first side, while the water leaves the moving bed filter near a second side, situated opposite to the first side. In this case, an additional advantage is that the air bubbles, initially present in the water, will be removed from the water while passing the moving bed filter, hindered by the substrate present in the water. This is important in case a pump is placed behind the moving bed filter, as a pump is known to cause problems when pumping a water-air bubbles mixture.

A further favourable realisation of the inventive method is characterised in that at the bottom of the moving bed filter ozone is supplied. Ozone stops the biological purification process substantially completely, but is capable of removing some forms of impurities by itself by oxidising the impurities or by rendering them harmless in another way.

A further favourable realisation of this inventive method is characterised in that the particles filter is located above the moving bed filter in such a way that ozone, escaping from the moving bed filter is removed via the particles filter. The advantage is that the ozone will also stop the growth of bacteria on the particles filter, so that the particles filter, when it is well designed, does not require maintenance any more.

The invention also relates to a filter combination, comprising a particles filter and a moving bed filter. The inventive filter combination is characterised in that the particles filter and the moving bed filter are accommodated in a single casing and that the particles filter is placed above the moving bed filter, in such a manner that water originating from the particles filter flows onto a top of the moving bed filter. The result is that the moving bed filter will be kept moving by the water flowing out of the particles filter, so that special measures to keep the moving bed filter moving can be left out.

A favourable embodiment with which the movement of the moving bed can be optimised in a simple way is characterised in that the moving bed filter is designed at least substantially rectangular shaped, that the particles filter is arranged so that water originating from the particles filter flows onto the moving bed filter near a first side, and that the moving bed filter is provided with at least one outlet near a second side, situated opposite to the first side. An additional advantage is here that the air bubbles, initially present in the water, will be removed from the water while passing the moving bed filter, hindered by the substrate present in the water. This is important for a pump placed behind the moving bed filter, as a pump is known to cause problems when pumping a water-air bubbles mixture.

A further favourable embodiment is characterised in that the particles filter is provided with a funnel-shaped body, via which water flows along at least substantially the entire length of the first side onto the moving bed filter. Preferably, the outlet comprises a pipe provided with perforations, positioned on a bottom side and stretching along substantially the entire length of the second side. In this way, the moving bed filter is utilised over its entire length, while the perforations prevent the substrate from leaving the moving bed via the outlet. As the pipe is placed on a bottom side of the moving bed, the chance that air bubbles enter the pipe is small.

A further favourable embodiment is according to another aspect of the invention characterised in that a feed is provided on a bottom side of the moving bed filter, for the supply of ozone. Preferably, the feed is arranged for supplying the ozone shaped as small gas bubbles, so that the ozone enters the water shaped as very fine bubbles which may easily dissolve and react with substances present in the water which are to be eliminated by oxidation. The fine bubbles also easily attach to the substrate, present in the moving bed filter, as a result of which they can remain present in the liquid for a prolonged time.

An important additional advantage of the supply of ozone is that the ozone escaping from the moving bed filter can reach the particles filter. This residual ozone, of which the concentration is very low, prevents the growth of a layer of micro-organisms on the particles-filter surface, which would eventually cause the particles filter to clog up.

The invention will now be further explained with a reference to the following figures, in which:
- Fig. 1: schematically represents a possible embodiment of a filter combination according to the invention;
- Fig. 2A: represents more in detail the particles filter in side view;
- Fig. 2B: represents more in detail the particles filter in front view;
- Fig. 3A: represents more in detail the moving bed filter in front view;
- Fig. 3B: represents the moving bed filter in top view.

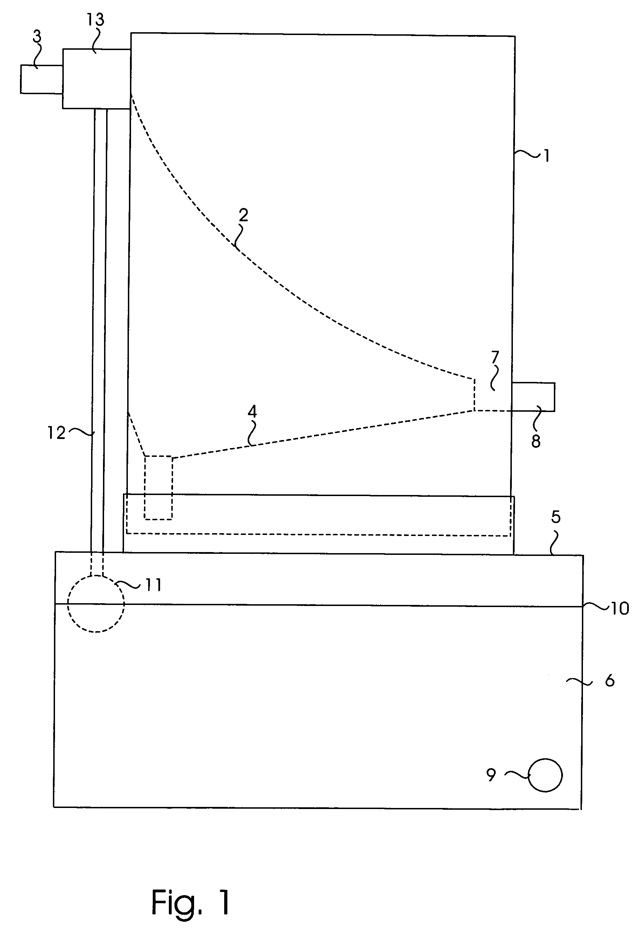

Fig. 1 schematically represents a possible embodiment of a filter combination according to the invention, consisting of a first casing 1, made of plastic, inside of which a screen 2 is mounted, over which water flows which is supplied via an inlet 3. The water falls through screen 2, is collected by a funnel 4 and is drained off to a moving bed filter 6 positioned in a casing 5. Particles which cannot pass screen 2 will remain on the surface of screen 2 and will be washed off downward, until they land in a drain 7 and will be disposed off via a waste pipe 8 to for example the sewer. Water supplied via funnel 4 falls into moving bed filter 6 and creates there the necessary movement. The water is purified with the aid of substrate, not visible in the figure, present in the moving bed filter, and leaves the moving bed filter 6 via an outlet 9.

For a proper operation of the filter combination, the water level 10 must be kept more or less constant. For that purpose a float 11 is placed inside moving bed filter 6, which operates a valve 13 placed in inlet 3 via a rod 12 in a further obvious manner. If desired, a control mechanism known from patent application NL 1014021 or NL 1023750 may be used instead of valve 13.

Operationally, casing 1 and casing 5 form an entity, but they may easily be taken apart, for example if they have to be cleaned.

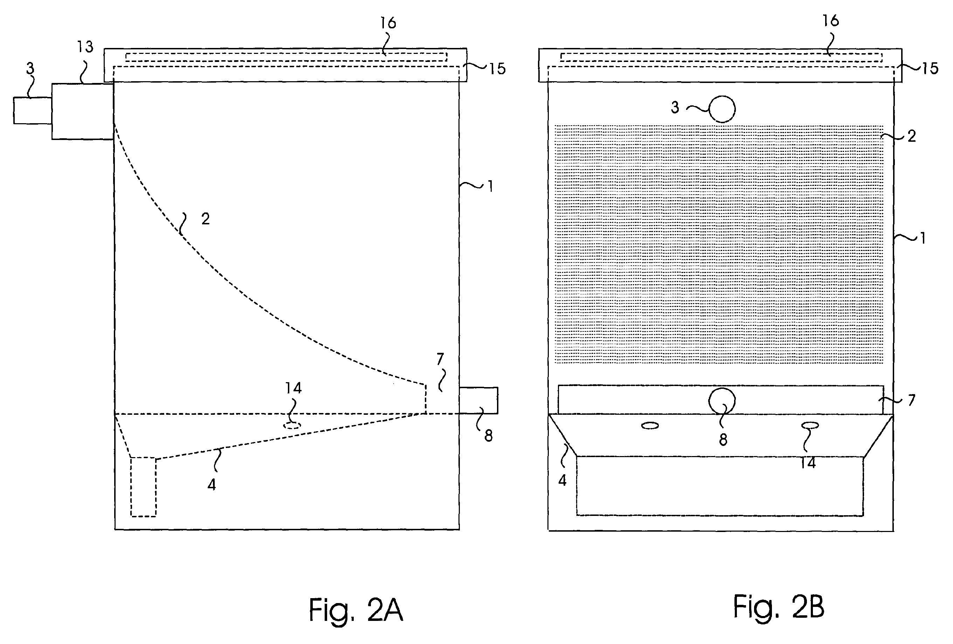

Fig. 2A represents more in detail the particles filter in side view, with screen 2 and funnel 4, in which a few holes 14 have been made via which ozone which may be supplied to the moving bed filter may reach screen 2 as well. This ozone prevents the growth of micro-organisms on screen 2, which makes screen 2 maintenance free. If desired, the top side of casing 1 may be provided with a lid 15 inside of which a well known carbon filter 16 is mounted, for draining off the remaining ozone.

Fig. 2B represents more in detail the particles filter in front view with screen 2, in this embodiment consisting of a thin plate made of stainless steel, in which a large number of horizontally positioned slots have been etched. Particles which cannot pass screen 2 will remain on the surface of screen 2 and will be flushed off, until they land in a drain 7 and will be disposed off via a waste pipe 8. Moreover funnel 4 is visible, in which a few holes 16 have been made via which ozone which may be supplied to the moving bed filter can reach screen 2 as well.

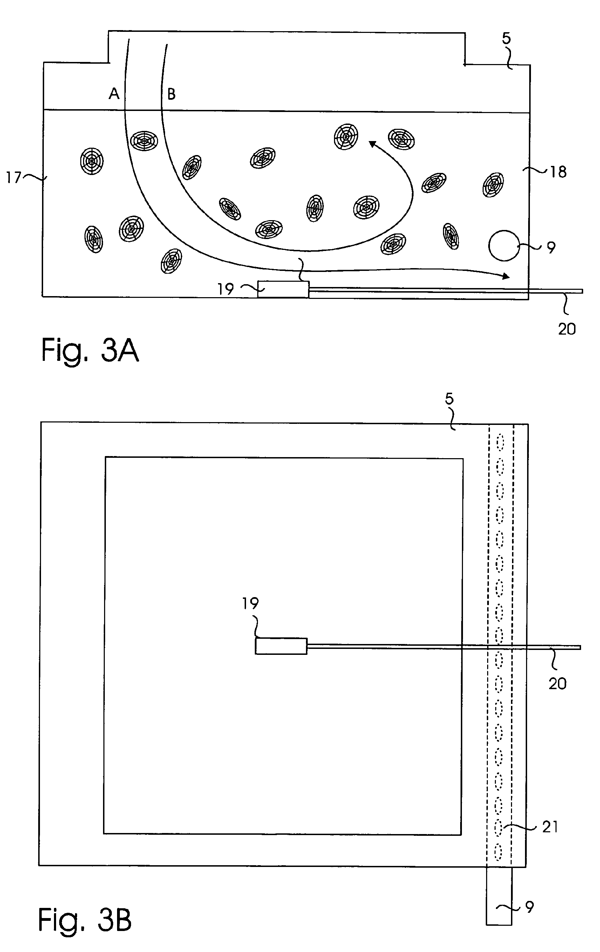

Fig. 3A represents more in detail the moving bed filter in front view, consisting of a casing 5, filled with a mixture of water to be purified and a substrate consisting of a large number of small objects having a relatively large surface area, manufactured of a material having a density which substantially corresponds with the density of water. Onto the surface of this substrate a layer of bacteria will attach after a while, in which the actual biological purification processes will take place. In the embodiment shown here, the substrate consists of plastic wheels, made for example of polyethylene and having a diameter of 9 millimetres, making up about 30% of the volume of the moving bed. Water which falls via funnel 4 in the moving bed filter, flows in a manner indicated in the figure with an A from a first side 17 through and along the substrate to a second side 18, where it may leave the filter combination via an outlet 9, a pipe provided with perforations. Apart from the direct current A from the first side 17 to the second side 18, a turbulent current B will also develop in the water plus the substrate, as a result of which the air, taken along with the water will circulate for a prolonged time in the water.

In the embodiment shown here, the moving bed filter is provided with an aerolite 19, a very porous type of stone well known in the art, via which ozone can be supplied shaped as very fine air bubbles. The ozone is supplied via a supply pipe 20 from an ozoniser, not shown and as such well known in the art. When ozone is supplied, biological purification processes will not take place, but instead purification will take place due to the strong oxidising action of the ozone. A small part of the ozone will thereby leave the water present in the moving bed filter and this part will reach screen 2 via holes 14 in funnel 4, where a bacterial growth will be prevented.

Fig. 3B represents the moving bed filter in top view, with casing 5, aerolite 19 and outlet pipe 9, provided with perforations 21, of which the dimensions have been chosen such that water may leave the moving bed filter, while the substrate cannot.

## Claims

1. Method for cleaning water, according to which water is conducted through a particles filter and subsequently through a moving bed filter, **characterised in that** water originating from the particles filter flows onto a top of the moving bed filter.

2. Method according to claim 1, **characterised in that** the water flows onto the moving bed filter near a first side, while the water leaves the moving bed filter near a second side, situated opposite to the first side.

3. Method according to claim 1 or 2, **characterised in that** at the bottom of the moving bed filter ozone is supplied.

4. Method according to claim 3, **characterised in that** the particles filter is located above the moving bed filter in such a way that ozone, escaping from the moving bed filter is removed via the particles filter.

5. Filter combination, comprising a particles filter and a moving bed filter, **characterised in that** the particles filter and the moving bed filter are accommodated in a single casing and that the particles filter is placed above the moving bed filter, in such a manner that water originating from the particles filter flows onto a top of the moving bed filter.

6. Filter combination according to claim 5, **characterised in that** the moving bed filter is designed at least substantially rectangular shaped, that the particles filter is arranged so that water originating from the particles filter flows onto the moving bed filter near a first side, and that the moving bed filter is provided with at least one outlet near a second side, situated opposite to the first side.

7. Filter combination according to claim 6, **characterised in that** the particles filter is provided with a funnel-shaped body, via which water flows along at least substantially the entire length of the first side onto the moving bed filter.

8. Filter combination according to claim 6, **characterised in that** the outlet comprises a pipe provided with perforations, positioned on a bottom side and stretching along substantially the entire length of the second side.

9. Filter combination according to one of the claims 5 to 8, **characterised in that** a feed is provided on a bottom side of the moving bed filter, for the supply of ozone.

10. Filter combination according to claim 9, **characterised in that** the feed is arranged for supplying the ozone shaped as small gas bubbles.
